# EUROPÄISCHE PATENTSCHRIFT

(11) **EP 2 612 882 B1**
(45) Veröffentlichungstag und Bekanntmachung des Hinweises auf die Patenterteilung: **02.03.2016**
(21) Anmeldenummer: 12195897.9
(22) Anmeldetag: 06.12.2012
(51) Int. Cl.: C08K 5/5435, C08K 3/36

(54) **Kautschukmischungen**
Rubber mixtures
Mélanges de caoutchouc

(30) Priorität: 06.01.2012 DE 102012200166
(43) Veröffentlichungstag der Anmeldung: 10.07.2013
(73) Patentinhaber: Evonik Degussa GmbH, 45128 Essen (DE)
(72) Erfinder: Blume, Anke, Dr., 53919 Weilerswist (DE); Karasewitsch, Eugenie, 29525 Uelzen (DE)

(56) Entgegenhaltungen:
- EP-A1- 1 550 694
- DATABASE WPI Week 200875 Thomson Scientific, London, GB; AN 2008-M71312 XP002693784, -& JP 2008 239713 A (NIPPON ZEON KK) 9. Oktober 2008 (2008-10-09)
- DATABASE WPI Week 201204 Thomson Scientific, London, GB; AN 2012-A07950 XP002693794, -& WO 2011/162004 A1 (DENKI KAGAKU KOGYO KK) 29. Dezember 2011 (2011-12-29)

## Beschreibung

Die Erfindung betrifft Kautschukmischungen, ihre Herstellung und ihre Verwendung.

Aus "High-performance HT-ACMs for automotive molded and extruded applications", Rubber World Oct. 2007, Seite 46-54 sind vulkanisierbare Kautschukmischungen auf Basis von Polyacrylatelastomeren bekannt.

Aus JP 2008239713 A sind Kautschukmischungen enthaltend Polyacrylatkautschuk, silikatische Füllstoffe und ein Epoxygruppen enthaltendes Silan bekannt.

Ferner sind aus EP 1550694 A1 und WO 2011/162004 Polyacrylatkautschukmischungen mit Kupplungsmittel bekannt. In den Beispielen werden unter anderen Glycidoxypropylmethoxysilane beschrieben.

Nachteil der bekannten Kautschukmischungen, enthaltend Polyacrylatelastomer, sind die schlechten dynamischen Eigenschaften.

Aufgabe der Erfindung ist es, Kautschukmischungen, enthaltend Polyacrylatelastomer, zur Verfügung zu stellen, die verbesserte dynamische Eigenschaften aufweisen.

Gegenstand der Erfindung sind Kautschukmischungen nach Anspruch 1, welche dadurch gekennzeichnet sind, daß sie
(A) mindestens einen Polyacrylatkautschuk,
(B) mindestens einen silikatischen oder oxidischen Füllstoff oder Ruß und
(C) mindestens ein Epoxysilan der Formel I 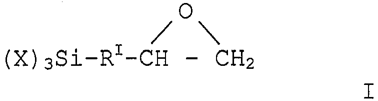 , wobei X
   -OCH₂CH₃ ist,
   R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, oder eine zweibindige Alkylethergruppe ist, enthalten.
   R^{I} kann -CH₂-, -CH₂CH₂-, -CH₂CH₂CH₂-, -CH₂CH₂CH₂CH₂-, - CH(CH₃)-, -CH₂CH(CH₃)-, -CH(CH₃)CH₂-, -C(CH₃)₂-, - CH(C₂H₅)-, -CH₂CH₂CH(CH₃)-, -CH₂(CH₃)CH₂CH₂-, - CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂-O-CH2-, -CH2-O-CH2CH2-, -CH2CH2-O-CH2-, -CH2CH2CH2-O-CH2-, -CH₂-O-CH₂CH₂CH₂-, -CH₂CH₂-O-CH₂CH₂-, -CH2CH2-O-CH2CH2CH2-, -CH2CH2CH2-O-CH2CH2-
   oder 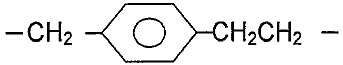 bedeuten.

Epoxysilane der allgemeinen Formel I können sein:
(C₂H₅O)₃Si(CH₂)₃-O-CH₂-CH(O)CH₂,
(C₂H₅O)₃Si-CH₂-O-(CH₂)₃-CH(O)CH₂,
(C₂H₅O)₃Si-(CH₂)₂-O-(CH₂)₂-CH(O)CH₂,
(C₂H₃O)₃Si-CH₂-O-CH₂-CH(O)CH₂.

Es können in den erfindungsgemäßen Kautschukmischungen Epoxysilane der allgemeinen Formel I oder auch Mischungen aus Epoxysilane der allgemeinen Formel I eingesetzt werden.

Es können in den erfindungsgemäßen Kautschukmischungen Hydrolysate, oligomere oder polymere Siloxane und Kondensate der Verbindungen der allgemeinen Formel I eingesetzt werden.

Die Epoxysilane der Formel I können sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürlich oder synthetische Oxide, beispielsweise Aluminiumoxid, oder Ruße sein. Desweiteren können die Epoxysilane der Formel I auch vorreagiert mit dem einzusetzenden Füllstoff dem Mischprozeß zugegeben werden.

Bevorzugte Wachse können Wachse mit Schmelzpunkten, Schmelzbereichen oder Erweichungsbereichen zwischen 50° und 200°C, bevorzugt 70° und 180°C, besonders bevorzugt zwischen 90° und 150°C, ganz besonders bevorzugt zwischen 100° und 120°C, sein.
Die verwendeten Wachse können olefinische Wachse sein.
Die verwendeten Wachse können gesättigte und ungesättigte Kohlenwasserstoffketten enthalten.
Die verwendeten Wachse können Polymere oder Oligomere, bevorzugt Emulsions-SBR oder/und Lösungs-SBR, enthalten.
Die verwendeten Wachse können langkettige Alkane oder/und langkettige Carbonsäuren enthalten.
Die verwendeten Wachse können Ethylenvinylacetat und/oder Polyvinylalkohole enthalten.

Die Epoxysilane der Formel I können physikalisch vermischt mit einem organischen Stoff, oder einem organischen Stoffgemisch dem Mischprozess zugegeben werden.

Der organische Stoff oder das organische Stoffgemisch kann Polymere oder Oligomere enthalten.
Polymere oder Oligomere, können heteroatom-enthaltende Polymere oder Oligomere, zum Beispiel Ethylenvinylalkohol oder/und Polyvinylalkohole, sein. Polymere oder Oligomere können gesättigte oder ungesättigte Elastomere, bevorzugt Emulsions-SBR oder/und Lösungs-SBR, sein.
Der Schmelzpunkt, Schmelzbereich oder Erweichungsbereich der Mischung aus Epoxysilane der Formel I und organischem Stoff oder einem organischen Stoffgemisch kann zwischen 50 und 200°C, bevorzugt zwischen 70 und 180°C, besonders bevorzugt zwischen 70 und 150°C, ganz besonders bevorzugt zwischen 70 und 130°C, außerordentlich bevorzugt zwischen 90 und 110°C, betragen.

Als silikatische oder oxidische Füllstoffe können für die erfindungsgemäßen Kautschukmischungen eingesetzt werden:
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g, (BET-Oberfläche) und eine Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate können eine BET-Oberfläche von 20 bis 400 m²/g und einen Primärteilchendurchmesser von 10 bis 400 nm haben.
- Synthetische oder natürliche Aluminiumoxide und - hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können gefällte Kieselsäuren, hergestellt durch Fällung von Lösungen von Silikaten, mit BET-Oberflächen von 20 bis 400 m²/g eingesetzt werden. Die amorphen Kieselsäuren können in Mengen von 5 bis 150 Gew.-Teilen, jeweils bezogen auf 100 Teile Kautschuk (phr), eingesetzt werden.

Als Ruß können beispielsweise Flammruß, Furnaceruß, Gasruß oder Thermalruß eingesetzt werden. Die Ruße können eine BET-Oberfläche von 20 bis 200 m²/g, vorzugsweise 30 bis 100 m²/g, haben. Die Ruße können gegebenenfalls auch Heteroatome, wie zum Beispiel Si, enthalten. Die Ruße können in Mengen von 5 bis 150 Gew.-Teilen, jeweils bezogen auf 100 Teile Kautschuk (phr), eingesetzt werden.
Die genannten Füllstoffe können alleine oder im Gemisch eingesetzt werden.
In einer besonders bevorzugten Ausführung können die Kautschukmischungen 10 bis 150 Gew.-Teile silikatische oder oxidische Füllstoffe, gegebenenfalls zusammen mit 0 bis 100 Gew.-Teilen Ruß, sowie 1 bis 20 Gew.-Teile Epoxysilane der Formel I, jeweils bezogen auf 100 Gew.-Teile Kautschuk, enthalten.
In einer weiteren besonders bevorzugten Ausführung können die Kautschukmischungen 10 bis 150 Gew.-Teile Ruß, gegebenenfalls zusammen mit 0 bis 100 Gew.-Teilen oxidische Füllstoff, sowie 1 bis 20 Gew.-Teile Epoxysilane der Formel I, jeweils bezogen auf 100 Gew.-Teile Kautschuk, enthalten.
Der Polyacrylatkautschuk in den erfindungsgemäßen Kautschukmischungen ist PolyacrylatKautschuk (ACM). ACM weist eine hohe Beständigkeit gegen Sauerstoff, Ozon und hohe Temperaturen und eine gute Quellbeständigkeit in Mineralölen jedoch eine hohe Wasseraufnahme und schlechte Hydrolysebeständigkeit auf.

Zusätzlich können die erfindungsgemäßen Kautschukmischungen Naturkautschuk oder Synthesekautschuke enthalten. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloropren (CR);
- Isobutylen/Isopren-Copolymerisate (IIR);
- Butadien/Acrylnitril-Copolymere mit Acrylnitrilgehalten von 5 bis 60, vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxyfunktionalisierter NBR oder Silanol- (-SiOH) bzw. Silylalkoxy-funktionalisierter (-Si-OR) SBR;
sowie Mischungen dieser Kautschuke.

Die erfindungsgemäßen Kautschukmischungen können weitere Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie beispielsweise Triethanolamin oder Hexantriol, enthalten.

Weitere Kautschukhilfsstoffe können sein: Polyethylenglykol oder/und Polypropylenglykol oder/und Polybutylenglykol mit Molgewichten zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol,
kohlenwasserstoffterminiertes Polyethylenglykol Alk^{I}-O-(CH₂-CH₂-O)_{yI}-H bzw. Alk^{I}-(CH₂-CH₂-O)_{yI}-Alk^{I},
kohlenwasserstoffterminiertes Polypropylenglykol Alk^{I}-O-(CH₂-CH(CH₃)-O)_{yI}-H bzw. Alk^{I}-O-(CH₂-CH(CH₃)-O)_{yI}-Alk^{I},
kohlenwasserstoffterminiertes Polybutylenglykol Alk^{I}-O-(CH₂-CH₂-CH₂-CH₂-O)_{yI}-H, Alk^{I}-O-(CH₂-CH(CH₃)-CH₂-O)_{yI}-H, Alk^{I}-O-(CH₂-CH₂-CH₂-CH₂-O)_{yI}-Alk^{I} oder Alk^{I}-O-(CH₂-CH(CH₃)-CH₂-O)_{yI}-Alk^{I},
mit y^{I} im Mittel 2-25, bevorzugt y^{I} im Mittel 2-15, besonders bevorzugt y^{I} im Mittel 3-8 und 10-14, ganz besonders bevorzugt y^{I} im Mittel 3-6 und 10-13, und Alk^{I} gleich ein verzweigter oder unverzweigter, unsubstituierter oder substituierter, gesättigter oder ungesättigter Kohlenwasserstoff mit 1 bis 35, bevorzugt 4 bis 25, besonders bevorzugt 6 bis 20, ganz besonders bevorzugt 10 bis 20, außerordentlich bevorzugt 11 bis 14, Kohlenstoffatomen,
polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH)₄ oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sein kann.

Zur Mittelwertberechnung von y^{I} kann die analytisch bestimmbare Menge an Polyalkylenglykoleinheiten zur analytisch bestimmbaren Menge an -Alk^{I} ins Verhältnis gesetzt werden [Menge Polyalkylenglykoleinheiten)/(Menge -Alk^{I})]. Zur Bestimmung der Mengen kann zum Beispiel die ¹H- und ¹³C-Kernresonanzspektroskopie eingesetzt werden.

Die erfindungsgemäße Kautschukmischung kann weitere Silane enthalten.

Als weitere Silane können den erfindungsgemäßen Kautschukmischungen ethoxysilylgruppenhaltige Mercaptoorganylsilane, oder / und ethoxysilylgruppenhaltige Thiocyanatoorganylsilane oder / und ethoxysilylgruppenhaltige geblockte Mercaptoorganylsilane oder / und ethoxysilylgruppenhaltige polysulfidische Alkoxysilane zugesetzt werden.

Als weitere Silane können den erfindungsgemäßen Kautschukmischungen triethoxysilylgruppenhaltige Mercaptoorganylsilane,
oder / und triethoxysilylgruppenhaltige Thiocyanatoorganylsilane
oder / und triethoxysilylgruppenhaltige geblockte Mercaptoorganylsilane
oder / und triethoxysilylgruppenhaltige polysulfidische Alkoxysilane zugesetzt werden.

Als weitere Silane können den erfindungsgemäßen Kautschukmischungen Mercaptoorganyl(alkoxysilane) mit C₈-H₁₇-O-, C₁₀H₂₁-O-, C₁₂H₂₅-O-, C₁₄H₂₉-O-, C₁₆H₃₃-O- oder C₁₈-H₃₇-O- Gruppen am Silicium zugesetzt werden.

Als weitere Silane können den erfindungsgemäßen Kautschukmischungen geblockte Mercaptoorganyl (alkoxysilane) mit C₈H₁₇-O-, C₁₀H₂₁-O-, C₁₂H₂₅-O-, C₁₄H₂₉-O-, C₁₆H₃₃-O- oder C₁₈-H₃₇-O- Gruppen am Silicium zugesetzt werden.

Als weitere Silane können den erfindungsgemäßen Kautschukmischungen geblockte Mercaptoorganyl(alkoxysilane) mit difunktionellen Alkoholen (Diolen) am Silicium (z.B. NXT LowV oder NXT Ultra-LowV der Firma General Electric) zugesetzt werden.

Als weitere Silane können den erfindungsgemäßen Kautschukmischungen polysulfidische Alkoxysilane der Formeln
EtO-Si(Me)₂-CH₂-CH₂-CH₂-S₂-CH₂-CH₂-CH₂-Si(Me)₂(OEt),
EtO-Si(Me)₂-CH₂-CH₂-CH₂-S₃-CH₂-CH₂-CH₂-Si(Me)₂(OEt) oder
EtO-Si(Me)₂-CH₂-CH₂-CH₂-S₄-CH₂-CH₂-CH₂-Si(Me)₂(OEt) zugesetzt werden.

Als weitere Silane können den erfindungsgemäßen Kautschukmischungen 3-Mercaptopropyl(triethoxysilan) (beispielsweise Si263 der Firma Evonik Industries AG), 3-Thiocyanatopropyl(triethoxysilan) (beispielsweise Si 264 der Firma Evonik Industries AG),

Bis(triethoxysilylpropyl)polysulfid (beispielsweise Si 69 der Firma Evonik Industries AG),
Bis(triethoxysilylpropyl)disulfid (beispielsweise Si 266 der Firma Evonik Industries AG) zugesetzt werden.

Als weitere Silane können den erfindungsgemäßen Kautschukmischungen alkylpolyetheralkoholhaltige Mercaptoorganylsilane (beispielsweise Si 363 der Firma Evonik Industries AG),
oder / und alkylpolyetheralkoholhaltige, Thiocyanatoorganylsilane,
oder / und alkylpolyetheralkoholhaltige, geblockte Mercaptoorganylsilane,
oder / und alkylpolyetheralkoholhaltige, polysulfidische Silane, zugesetzt werden.

Die alkylpolyetheralkoholhaltigen Mercaptoorganylsilane können Verbindungen der allgemeinen Formel II

(X)₃Si-R^{I}-SH II

sein, wobei mindestens ein X eine Alkylpolyethergruppe ist.

Die alkylpolyetheralkoholhaltigen, geblockten Mercaptoorganylsilane können Verbindungen der allgemeinen Formel III

(X)₃Si-R^{I}-S-C(O)-Alk^{II} III

sein, wobei mindestens ein X eine Alkylpolyethergruppe ist und Alk^{II} eine verzweigte oder unverzweigte, gesättigte oder ungesättigte, substituierte oder unsubstituierte, aliphatische, aromatische oder gemischt aliphatische /aromatische einbindige Kohlenwasserstoffgruppe, bevorzugt C₁-C₂₅-, besonders bevorzugt C₂-C₂₂-, ganz besonders bevorzugt C₇-C₁₇-, außerordentlich bevorzugt C₁₁-C₁₆-, Kohlenwasserstoffgruppe, ist.

Die Kautschukhilfsmittel können in bekannten Mengen, die sich unter anderem nach dem Verwendungszweck richten, eingesetzt werden. Übliche Mengen je eingesetztes Verarbeitungshilfsmittel können Mengen von 0,001 bis 50 Gew.-%, bevorzugt 0,001 bis 30 Gew.-%, besonders bevorzugt 0,01 bis 30 Gew.-%, ganz besonders bevorzugt 0,1 bis 30 Gew.%, bezogen auf Kautschuk (phr), sein.

Die erfindungsgemäßen Kautschukmischungen können schwefelvulkanisierbare Kautschukmischungen sein.

Die erfindungsgemäßen Kautschukmischungen können peroxidisch vernetzbare Kautschukmischungen sein.

Als Vernetzer können Schwefel oder schwefelspendende Substanzen eingesetzt werden. Der Schwefel kann in Mengen von 0,1 bis 10 Gew.-%, bevorzugt 0,1 bis 5 Gew.-%, bezogen auf Kautschuk, eingesetzt werden.

Die erfindungsgemäßen Kautschukmischungen können weitere Vulkanisationsbeschleuniger enthalten.

Die Vulkanisationsbeschleuniger können in Mengen von 0,1 bis 10 Gew.-%, bevorzugt 0,1 bis 5 Gew.-%, bezogen auf den eingesetzten Kautschuk, eingesetzt werden.

Die erfindungsgemäßen Kautschukmischungen können
(D) einen Thiuramsulfid- und/oder Carbamatbeschleuniger und/oder die entsprechenden Zinksalze,
(E) gegebenenfalls einen stickstoffhaltigen Co-Aktivator,
(F) gegebenenfalls weitere Kautschukhilfsmittel und
(G) gegebenenfalls weitere Beschleuniger
enthalten.

Ein weiterer Gegenstand der Erfindung ist ein Verfahren zur Herstellung der erfindungsgemäßen

Kautschukmischungen, welches dadurch gekennzeichnet ist, daß man mindestens einen Polyacrylatkautschuk, mindestens einen silkatischen oder oxidischen Füllstoff oder Ruß und mindestens ein Epoxysilan der Formel I mischt.

Das Epoxysilan kann ein Epoxysilan der allgemeinen Formel I sein.

Das erfindungsgemäße Verfahren kann bei Temperaturen >25°C durchgeführt werden.

Das erfindungsgemäße Verfahren kann im Temperaturbereich zwischen 80°C und 200°C, bevorzugt zwischen 100°C und 180°C, besonders bevorzugt zwischen 110°C und 160°C, durchgeführt werden.

Das Verfahren kann kontinuierlich oder diskontinuierlich durchgeführt werden.

Die Zugabe des Epoxysilans der allgemeinen Formel I, sowie die Zugabe der Füllstoffe können bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die Abmischung der Kautschuke mit dem Füllstoff, gegebenenfalls Kautschukhilfsmitteln und dem Epoxysilan der allgemeinen Formel I kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, das Epoxysilan der allgemeinen Formel I und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftfedern, Luftreifen, Reifenlaufflächen, , Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Vorteil der erfindungsgemäßen Kautschukmischungen sind die dynamischen Eigenschaften.

### Beispiele:

Es werden folgende Verbindungen in Kautschukmischungen verwendet:
3-Glycidyloxy-propyl-trimethoxy-silan ist unter dem Namen DYNASILAN GLYMO von der Firma EVONIK Industries erhältlich.
3-Glycidyloxy-propyl-triethoxy-silan ist unter dem Namen DYNASILAN GLYEO von der Firma EVONIK Industries erhältlich.
Amino-propyl-triethoxy-silan ist unter dem Namen DYNASILAN AMEO von der Firma EVONIK Industries erhältlich.
ASTM Ruß N 339 ist unter dem Namen Corax N 339 von der Firma Orion Engineered Carbons erhältlich.
ASTM Ruß N 660 ist unter dem Namen Corax N 660 von der Firma Orion Engineered Carbons erhältlich.
ASTM Ruß N 550 ist unter dem Namen Corax N 550 von der Firma Orion Engineered Carbons erhältlich.

### Beispiel 1: Kautschukmischungen

Die für die Kautschukmischungen verwendete Basisrezeptur ist in der folgenden Tabelle 1 angegeben. Dabei bedeutet die Einheit phr Gewichtsanteile, bezogen auf 100 Teile des eingesetzten Rohkautschuks.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1: Rezeptur**

| | Dosierung |
|---|---|
| | |
| | [phr] |
| **1. Stufe** | |
| Hytemp AR 71 (ACM) | 100 |
| Struktol WB 222 | 2 |
| Rhenofit OCD-SG | 2 |
| Vulkanol 81 | 5 |
| Stearinsäure | 2 |
| Füllstoff | Variabel |
| Silan | Isomolar |
| | |
| **2. Stufe** | |
| Batch Stufe 1 | |
| Rhenofit Na-stearat 80 | 3,5 |
| Schwefel | 0,4 |

Bei dem Polymer Hytemp AR 71 handelt es sich um ein inPolyacrylatkautschuk mit einer Mooney Viskosität zwischen 42 und 54 der Firma Zeons Chemicals. Ultrasil 360 ist eine Kieselsäure der EVONIK Industries. Struktol WB 222 ist ein wasserfreier Blend aus hochmolekularen, aliphatischen Fettsäureestern und Kondensationsprodukten der Firma... Struktol Company of America, Rhenofit OCD-SG ist ein octyliertes Diphenylamin der Firma RheinChemie und Vulkanol 81 ist eine Mischung aus Thioester und Carboxylische säuree Ester der Firma Lanxess. Rhenofit Na-stearat 80 ist Na-stearat gebunden auf Kieselsäure der Firma RheinChemie. Die Kautschukmischungen werden in einem Innenmischer entsprechend der Mischvorschrift in Tabelle 2 hergestellt.

**Tabelle 2**

| | | Stufe 1 | |
|---|---|---|---|
| Einstellungen | | | |
| Mischaggregat | | Werner & Pfleiderer E-Typ | |
| Drehzahl | | 90 min⁻¹ | |
| Stempeldruck | | 5,5 bar | |
| Leervolumen | | 1,58 L | |
| Füllgrad | | 0,55 | |
| Durchflußtemp. | | 90 °C | |
| Mischvorgang | | | |
| 0 bis | 1 min | Polymer, Kieselsäure, Silan | |
| 1 bis | 5 min | Säubern, Stearinsäure, Vulkanox, Vulkanol, Struktol | |
| 5 min | | Ausfahren, direkt auf Walze aufmischen | |
| | | | |
| Batch-Temp. | | 140-150°C | |
| Lagerung | | - | |
| | | | |

| | | | Stufe 2 |
|---|---|---|---|
| Einstellungen | | | |
| Mischaggregat Durchflußtemp. | | | Walze (Durchmesser 150 mm, Länge 350 50 °C |
| Mischvorgang | | | |
| 0 bis | 2 min | | Batch Stufe 1, Fell bilden und abkühlen |
| 2 bis | 8 min | | Rhenofit, Schwefel |
| | | | |
| | | | 3* links, 3* rechts einschneiden und |
| | | | 3* eng und |
| | | | 3* weit stürzen |
| | | | Fell ausziehen. |
| | | | |
| **Batch**-**Temp**. | | | **ca**. **70 °C** |

**Tabelle 4a**

| **Füllstoff/Silan** | | Referenzmischung 1' | **Referenzmischung 1** | **Erf. Mischung 2** | **Referenzmischung 2** | **Erf. Mischung 3** | **Referenzmischung 3** | **Erf. Mischung 4** | **Referenzmischung 4** | **Referenzmischung 5** |
|---|---|---|---|---|---|---|---|---|---|---|
| Füllstoff | | ULTRASIL | ULTRASIL | ULTRASIL | ULTRASIL | ULTRASIL | ULTRASIL | ULTRASIL | CORAX | CORAX |
| | | 360 | 360 | 360 | 360 | 360 | 360 | 360 | N 339 | N 660 |
| Füllstoffmengephr505050404030305050 | | | | | | | | | | |
| SilanGLYMOAMEOGLYEOAMEOGLYEOAMEOGLYEO-- | | | | | | | | | | |
| Silanmengephr3,203,003,802,403,041,802,28-- | | | | | | | | | | |
| *ML (1 +4) at 100 °C 1^{st} stage* | MU4086 418437773 56543 | | | | | | | | | |
| *ML(1+4) at 100* °C *2^{nd} stage* | MU3885 417838733 56241 | | | | | | | | | |

| | | | | | | | | | | |
|---|---|---|---|---|---|---|---|---|---|---|
| *Mooney Scorch* Scorch Time tmin42,43,822,422,123,328,526,728,233,5 *MDR:* 165 °C; 0.5° M_{L} dNm1,32,71,43,81,12,60,92,81,5 M_{H} dNm8,814,011,012,48,69,95,312,28,1 Delta torquedNm7,511,29,68,67,57,34,49,46,6 t 10 %min6,30,85,70,65,80,75,64,24,9 t 20 %min10,91,39,21,39,41,59,68,28,0 t 90 %min47,09,841,224,442,723,846,141,940,8 t 80 % - t 20 %min27,55,623,014,323,913,927,224,323,2 | | | | | | | | | | |

**Tabelle 4b**

| **Füllstoff/Silan** | Referenzmischung 1' | **Referenzmischung 1** | **Erf. Mischung 2** | **Referenzmischung 2** | **Erf. Mischung 3** | **Referenzmischung 3** | **Erf. Mischung 4** | **Referenzmischung 4** | **Referenzmischung 5** |
|---|---|---|---|---|---|---|---|---|---|
| Füllstoff | ULTRASIL | ULTRASIL | ULTRASIL | ULTRASIL | ULTRASIL | ULTRASIL | ULTRASIL | CORAX | CORAX |
| | 360 | 360 | 360 | 360 | 360 | 360 | 360 | N 339 | N 660 |
| Füllstoffmengephr505050404030305050 | | | | | | | | | |
| SilanGLYMOAMEOGLYEOAMEOGLYEOAMEOGLYEO-- | | | | | | | | | |
| Silanmengephr3,203,003,802,403,041,802,28-- | | | | | | | | | |

| | | | | | | | | | |
|---|---|---|---|---|---|---|---|---|---|
| *RPA-Strainsweep 28* % - *42* % - *Rohm.* *max. Schubmodul* [MPa]0,420,60,430,640,340,450,271,280,52 *min. Schubmodul* [MPa]0,20,30,210,340,190,270,170,250,19 Max Verlustfaktor tan(d)--0,3900,3170,3840,2950,347 0,2910,3110,4280,354 Verlustfaktor tan(d) bei 7%--0,2760,1930,2770,1790, 2560,1780,2400,3830,287 *RPA-Strainsweep 28* % - 100 % - *Vulk.* *max. Schubmodul* [MPa]0,771,340,791,10,580,80,392,850,86 *min. Schubmodul* [MPa]0,531,040,610,670,460,480,290,550,36 Max Verlustfaktor tan(d)--0,0860,1500,0680,1750,083 0,1720,0740,3000,157 Verlustfaktor tan(d) bei 7%--0,0770,0510,0520,0580, 0480,0490,0580,2770,149 | | | | | | | | | |

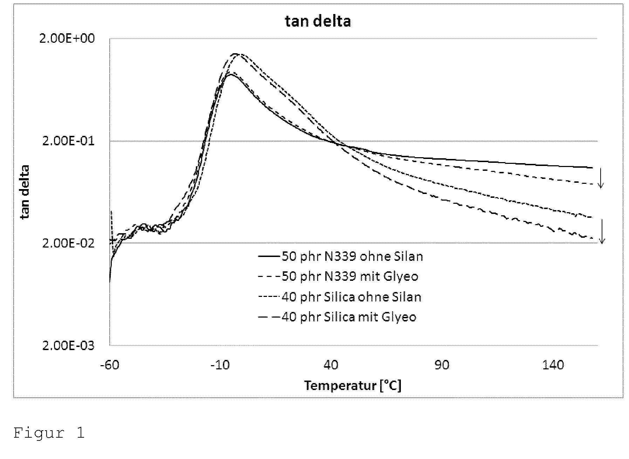

## Patentansprüche

1. Kautschukmischungen, **dadurch gekennzeichnet, dass** sie
(A) mindestens einen ACM-Polyacrylatkautschuk,
(B) mindestens einen silikatischen oder oxidischen Füllstoff oder Ruß und
(C) mindestens ein Epoxysilan
der Formel I 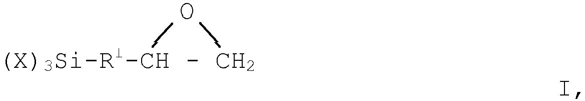 wobei
X -OCH₂CH₃ ist, R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, oder eine zweibindige Alkylethergruppe ist, enthalten.

2. Kautschukmischungen gemäß Anspruch 2, **dadurch gekennzeichnet, dass** das Epoxysilan der allgemeinen Formel I (C₂H₅O)₃Si(CH₂)₃-O-CH₂-CH(O)CH₂ oder (C₂H₅O)₃Si-CH₂-O-(CH₂)₃-CH(O)CH₂ ist.

3. Kautschukmischungen gemäß den Ansprüchen 1 und 2, **dadurch gekennzeichnet, dass** das Epoxysilan ein Gemisch aus Epoxysilanen der allgemeinen Formel I ist.

4. Kautschukmischungen gemäß Anspruch 1, **dadurch gekennzeichnet, dass** das Epoxysilan auf einen inerten organischen oder anorganischen Träger aufgezogen oder mit einem organischen oder anorganischen Träger vorreagiert sind.

5. Kautschukmischungen gemäß Anspruch 1, **dadurch gekennzeichnet, dass** diese ein zusätzliches Silan enthalten.

6. Kautschukmischungen gemäß Anspruch 1, **dadurch gekennzeichnet, dass** diese
(D) einen Thiuramsulfid- und/oder Carbamatbeschleuniger und/oder die entsprechenden Zinksalze,
(E) gegebenenfalls einen stickstoffhaltigen Co-Aktivator,
(F) gegebenenfalls weitere Kautschukhilfsmittel und
(G) gegebenenfalls weitere Beschleuniger enthalten.

7. Verfahren zur Herstellung der Kautschukmischungen gemäß den Ansprüchen 1 bis 5, **dadurch gekennzeichnet, dass** man mindestens einen ACM-Polyacrylatkautschuk, mindestens einen silikatischen oder oxidischen Füllstoff oder Ruß und mindestens ein Epoxysilan der Formel I mischt.

8. Verwendung von Kautschukmischungen gemäß den Ansprüchen 1 bis 6 zur Herstellung von Formkörpern.

9. Verwendung von Kautschukmischungen gemäß den Ansprüchen 1 bis 6 in Luftfedern, Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures **characterized in that** they comprise
(A) at least one ACM polyacrylate rubber,
(B) at least one silicatic or oxidic filler or carbon black and
(C) at least one epoxysilane of the formula I 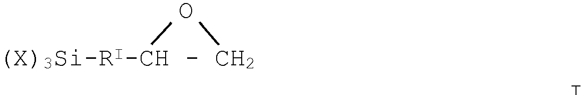 where
X is -OCH₂CH₃, R^{I} is a branched or unbranched, saturated or unsaturated, aliphatic, aromatic or mixed aliphatic/aromatic divalent C₁-C₃₀ hydrocarbon group which optionally has substitution, or a divalent alkyl ether group.

2. Rubber mixtures according to Claim 1, **characterized in that** the epoxysilane of the general formula I is (C₂H₅O)₃Si(CH₂)₃-O-CH₂-CH(O)CH₂ or (C₂H₅O)₃Si-CH₂ 0- (CH₂)₃-CH(O)CH₂.

3. Rubber mixtures according to Claims 1 and 2, **characterized in that** the epoxysilane is a mixture of epoxysilanes of the general formula I.

4. Rubber mixtures according to Claim 1, **characterized in that** the epoxysilane has been absorbed onto an inert organic or inorganic carrier or has been pre-reacted with an organic or inorganic carrier.

5. Rubber mixtures according to Claim 1, **characterized in that** these comprise an additional silane.

6. Rubber mixtures according to Claim 1, **characterized in that** these comprise
(D) a thiuram sulphide accelerator and/or carbamate accelerator and/or the corresponding zinc salts,
(E) optionally a nitrogen-containing co-activator,
(F) optionally further rubber auxiliaries, and
(G) optionally further accelerators.

7. Process for producing the rubber mixtures according to Claims 1 to 5, **characterized in that** at least one ACM polyacrylate rubber, at least one silicatic or oxidic filler or carbon black and at least one epoxysilane of the formula I are mixed.

8. Use of rubber mixtures according to Claims 1 to 6 for producing mouldings.

9. Use of rubber mixtures according to Claims 1 to 6 in air springs, pneumatic and other tyres, tyre treads, cable sheathing, hoses, drive belts, conveyor belts, roll coverings, shoe soles, sealing rings and damping elements.

## Revendications

1. Mélanges de caoutchouc, **caractérisés en ce qu'**ils contiennent
(A) au moins un caoutchouc de polyacrylate ACM,
(B) au moins une charge silicatée ou oxyde ou une suie et
(C) au moins un époxysilane de formule I 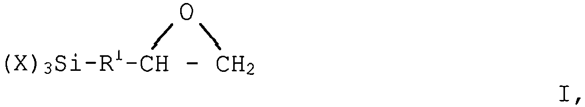 où
X représente -OCH₂CH₃, R^{I} représente un groupe hydrocarboné en C₁-C₃₀ ramifié ou non ramifié, saturé ou insaturé, aliphatique, aromatique ou aliphatique/aromatique mixte, divalent, qui est le cas échéant substitué ou représente un groupe alkyléther divalent.

2. Mélanges de caoutchouc selon la revendication 1, **caractérisés en ce que** l'époxysilane correspond à la formule générale I (C₂H₅O)₃Si(CH₂)₃-O-CH₂-CH(O)CH₂ ou (C₂H₅O)₃Si-CH₂-O-(CH₂)₃-CH(O)CH₂.

3. Mélanges de caoutchouc selon les revendications 1 et 2, **caractérisés en ce que** l'époxysilane est un mélange d'époxysilanes de formule générale I.

4. Mélanges de caoutchouc selon la revendication 1, **caractérisés en ce que** l'époxysilane est appliqué sur un support inerte organique ou inorganique ou a préréagi avec un support organique ou inorganique.

5. Mélanges de caoutchouc selon la revendication 1, **caractérisés en ce qu'**ils contiennent en outre un silane.

6. Mélanges de caoutchouc selon la revendication 1, **caractérisés en ce qu'**ils contiennent
(D) un accélérateur de type sulfure de thiuram et/ou carbamate et/ou les sels de zinc correspondants,
(E) le cas échéant un coactivateur azoté,
(F) le cas échéant d'autres adjuvants pour caoutchouc et
(G) le cas échéant d'autres accélérateurs.

7. Procédé pour la préparation de mélanges de caoutchouc selon les revendications 1 à 5, **caractérisé en ce qu'**on mélange au moins un caoutchouc de polyacrylate d'ACM, au moins une charge silicatée ou oxyde ou une suie et au moins un époxysilane de formule I.

8. Utilisation de mélanges de caoutchouc selon les revendications 1 à 6 pour la production de corps façonnés.

9. Utilisation de mélanges de caoutchouc selon les revendications 1 à 6 dans des amortisseurs pneumatiques, des chambres à air, des bandes de roulement de pneus, des gaines de câbles, des flexibles, des courroies de transmission, des bandes transporteuses, des revêtements de cylindres, des pneus, des semelles pour chaussures, des joints annulaires d'étanchéité et des éléments amortisseurs.
